# EUROPEAN PATENT APPLICATION

(11) **EP 4 541 942 A2**
(43) Date of publication of application: **23.04.2025**
(21) Application number: 24203740.6
(22) Date of filing: 30.09.2024
(51) Int. Cl.: C25B 11/032, C25B 11/069, C25B 11/093, H01M 4/86, H01M 4/88, H01M 4/92

(54) **NANOPOROUS POWDERS FOR FUEL CELL AND ELECTROLYZER APPLICATIONS**

(30) Priority: 29.09.2023 US 202363587017 P
(71) Applicant: The Board of Trustees of the Leland Stanford Junior University, Stanford, CA 94305 (US); VOLKSWAGEN AG, 38440 Wolfsburg (DE)
(72) Inventor: Atwa, Marwa, Stanford (US); Xu, Shicheng John, Stanford (US); Goh, Tim, Stanford (US); Prinz, Friedrich B., Stanford (US); Hübner, Gerold, Wolfsburg (DE); Mueller, Jonathan Edward, Wolfsburg (DE); Wiethop, Marco, Wolfsburg (DE); Vedran, Glavas, Wolfsburg (DE); Lasse, Schmidt, Wolfsburg (DE)
(74) Representative: Hentrich Patent- & Rechtsanwaltspartnerschaft mbB

(57) **Abstract**

The present invention relates to a method of producing a conductive nanoporous support, the method comprising i) producing an inorganic template by mixing and subjecting to high-energy ball milling an inorganic material and a powder selected from a carbonaceous material, a polymer, or a metal oxide; and ii) coating the inorganic template with metal nanoparticles to obtain the nanoporous support. The invention further relates to a conductive nanoporous support, an electrolytic electrode or gas diffusion electrode and an electrolytic cell or fuel cell.

## Description

### BACKGROUND

The following description of the background of the present technology is provided simply as an aid in understanding the present technology and is not admitted to describe or constitute prior art to the present technology.

The present disclosure relates generally to the field of conductive nanoporous supports for fuel cell applications. In particular, the present disclosure relates to nanoporous powders, and methods of making the same, which overcome the instability and performance issues attending conventional materials used in electrodes for fuel cells and electrolyzers. For instance, using the present nanoporous powders in production of electrodes for fuel cells significantly improves the stability (~30% higher than state of the art) and the performance (~ 20% higher than the state of the art). Against this backdrop, the present methods and materials were developed.

### SUMMARY

In one aspect, which may be combined with any other aspect or embodiment, the present disclosure relates to a method of producing a conductive nanoporous support, the method comprising: producing an inorganic template by mixing and subjecting to high-energy ball milling an inorganic material and a powder selected from a carbonaceous material, a polymer, or a metal oxide; and coating the inorganic template with metal nanoparticles to obtain the nanoporous support.

The inorganic material can comprise silica, alumina, magnesium oxide, titanium dioxide, zinc oxide, iron oxide, or a combination thereof. The carbon precursor can comprise petroleum pitch. The polymer can comprise a polyacrylonitrile, a cellulose, or a combination thereof.

The metal nanoparticles can comprise a platinum group metal or a noble metal. The platinum group metal can comprise Pt, Ru, Pd, Ru, Rh, Ir, Os, or any combination thereof, and the noble metal can comprise Au, Ag, Cu, or any combination thereof.

The method further can comprise etching the inorganic template using a strong acid or a strong base before or after the coating.

In another aspect, which may be combined with any other aspect or embodiment, the present disclosure relates to a conductive nanoporous support obtained by any of the methods according to the present disclosure, as described herein.

In another aspect, which may be combined with any other aspect or embodiment, the present disclosure relates to a conductive nanoporous support, comprising: an inorganic template, wherein the inorganic template is a nanoporous powder and comprises a carbonaceous material, a metal oxide, or a polymeric material having at least one of the following characteristics:a high specific surface area ranging from 150-800 m2/g, preferably 300-450 m2/g; primary and/or secondary powder agglomerates having a size in the range of 50-500 nm; a pore volume of 1-3 cm3/g, preferably 1.3-1.6 cm3/g; an average pore size of 4-50 nm, preferably 5-8 nm; or a single pore size with narrow distribution and standard deviation of 15-20% or a pore size with a spatial gradient where small pore sizes on the outer surface and large pore sizes on the inner surface of nanoporous powder.

The conductive nanoporous support further can comprise a coating layer comprising a metal, a metal oxide, a metal nitride, or a combination thereof. The coating can be present at a mass loading of 1-50%, by weight relative to the total weight of the conductive nanoporous support.

In another aspect, which may be combined with any other aspect or embodiment, the present disclosure relates to an electrolytic electrode or gas diffusion electrode, comprising: a gas diffusion layer (GDL) or porous transport layer (PTL); the conductive nanoporous support of any embodiment disclosed herein disposed on the GDL (or on the PTL); metal nanoparticles disposed on the conductive nanoporous support; and an ionomer in contact with the metal nanoparticles.

In another aspect, which may be combined with any other aspect or embodiment, the present disclosure relates to an electrolytic cell or fuel cell, comprising: a first electrode, wherein the first electrode is the electrode according to any of the embodiments disclosed herein, and wherein the first electrode is in contact with a first side of an ion-conducting membrane; and a second electrode, wherein the second electrode is the electrode according to any of the embodiments disclosed herein, and wherein the second electrode is in contact with a second side of the ion-conducting membrane, the second side being opposite the first side.

The first electrode can comprise Ir nanoparticles. The second electrode can comprise Pt nanoparticles.

In another aspect, which may be combined with any other aspect or embodiment, the present disclosure relates to a conductive nanoporous powder support, wherein the nanoporous powder comprises a carbon having at least one of the following:
a high specific surface area ranging from 150-800 m²/g, preferably 300-450 m²/g;
primary and/or secondary powder agglomerates having a size in the range of 50-500 nm;
a pore volume of 1-3 cm³/g, preferably 1.3-1.6 cm³/g;
an average pore size of 4-50 nm, preferably 5-8 nm; or
a single pore size with narrow distribution and standard deviation of 15-20% or a pore size with a spatial gradient where small pore sizes on the outer surface and large pore sizes on the inner surface of the nanoporous powders.

The conductive nanoporous powder support further can comprise a coating layer comprising metals, metal oxides, metal nitrides, or a combination thereof. The coating can be present at a mass loading of 1-50%, by weight relative to the total weight of the support. The coating layer can protect the nanoporous carbon powder from electrochemical oxidation in an acidic medium.

In another aspect, the present disclosure relates to a fuel cell electrode comprising an electrode catalyst layer prepared in a form of a gas diffusion electrode (GDE) or a catalyst-coated membrane (CCM) for polymeric electrolyte membrane fuel cells.

The GDE can be produced by a method comprising:
filtering or spraying nanoporous conductive powder and nanoporous carbon powder,
outlined in any of the above embodiments, on a gas diffusion layer; then,
depositing a catalyst including Pt, Pd, Ir, IrO₂, Ru, or an alloy thereof, with a transition metal and/or metal oxides on the coated gas diffusion layer; then,
functionalizing at least one type of ion-conducting polymer, forming a gas diffusion electrode (GDE); then,
pressing the gas diffusion electrode onto an ion conducting membrane; thereby forming a membrane electrode assembly (MEA).

The fuel cell electrode of the catalyst-coated membrane (CCM) can be prepared by:
a. atomic layer deposition (ALD) or chemical deposition of Pt, Pd, Ir, IrO₂, Ru, or alloys thereof, directly on a nanoporous carbon powder, as discussed above, forming catalyst-coated
   powder, wherein catalyst loading is 5-70 weight % on carbon;
b. forming a catalyst ink from the above-described catalyst powder by mixing the catalyst coated powder with an ionomer and a mixture of organic solvents with water;
c. coating the resulting ink on a substrate (either decal film or membrane) by means of a
   doctor blade, spray coat, slot dye nozzle or Flexo or Gravoure coating; or
d. hot pressing or laminating a decal film from c. on an ion conducting membrane or directly applying the coated membrane from c. as membrane electrode assembly (MEA) in a fuel cell by layering it with MPL-coated GDLs.

A conducting polymer is configured such that it cannot enter the small-scale pores and coat or poison the catalyst, but can coat the surface of the powder agglomerates.

In another aspect, the present disclosure relates to a membrane electrode assembly (MEA) for a fuel cell, comprising the electrode catalyst layer for a fuel cell as disclosed above, wherein the MEA provides at least one of:
power generation performance of a fuel cell of greater than or equal to 1400 mW/cm²;
catalytic mass activity of 0.5-1 A/mg of a single metal and alloy catalyst (with and without mixing with metals/metal oxides);
high stability of gradient coating of metal and metal alloy catalysts;
high retention of power generation performance (less than or equal to 10% loss) and/or catalytic activity (less than or equal to 20 % loss) after greater than or equal to 30,000 cycles of accelerated stress tests.

Reference will now be made in detail to some specific embodiments contemplated by the present disclosure. While various embodiments are described herein, it will be understood that it is not intended to limit the present technology to the described embodiments. On the contrary, it is intended to cover alternatives, modifications, and equivalents as may be included within the spirit and scope of the technology as defined by the appended claims.

### DETAILED DESCRIPTION

### Conductive Nanoporous Supports

### Inorganic Template

The present disclosure relates to a method of producing a conductive nanoporous support, the method comprising: producing an inorganic template by (i) mixing and subjecting to high-energy ball milling an inorganic material and a powder selected from a carbon precursor, a polymer, a metal, a metal oxide, or a metal oxide precursor; and (ii) coating the inorganic template with metal nanoparticles.

The inorganic material of the conductive nanoporous support may comprise any suitable material for supporting catalysts (*e*.*g*., metal nanoparticles) and having a suitable pore size for allowing reactants (*e*.*g*., oxygen, hydrogen, etc.) to diffuse through the conductive nanoporous support to contact a catalyst material, for facilitating electrical conductivity, for enhancing the dispersion of catalyst materials, and to provide chemical and thermal stability.

In some embodiments, the inorganic material comprises a metal oxide (*e*.*g*., titanium dioxide (TiO₂), silica (SiO₂), iron oxide (Fe₂O₃, Fe₃O₄, etc.), aluminum oxide (Al₂O₃), zirconium dioxide (ZrO₂), cerium oxide (CeO₂), tin oxide (SnO₂), zinc oxide (ZnO), manganese oxide (MnO₂), cobalt oxide (*e.g.*, Co₃O₄), nickel oxide (NiO), vanadium oxide (*e.g.*, V₂O₅), calcium oxide (CaO), magnesium oxide (MgO), ruthenium oxide (*e.g.*, RuO₂), perovskite oxides (*e*.*g*., lanthanum strontium manganite, lanthanum strontium cobalt ferrite, etc.), or any combination thereof. In some embodiments the inorganic material is a powder, a membrane, a felt, a fiber, nanorods or nanotubes, or any combination thereof.

In some embodiments, an inorganic template is prepared by mixing and subjecting to high-energy ball milling an inorganic material and a powder selected from a carbon precursor, a polymer, a metal, a metal oxide, or a metal oxide precursor.

In some embodiments, the carbon precursor comprises petroleum pitch, carbon black, graphite, graphene, carbon nanotubes, or any combination thereof. In some embodiments, the polymers comprise (but are not limited to) polyacrylonitriles, celluloses, polyvinylpyrrolidone (PVP), perfluorosulfonic acid (PFSA) ionomers (*e*.*g*., NAFION^{™}, AQUIVION^{®}), sulfonated polyether ether ketone (SPEEK), a doped polybenzimidazle (PBI), sulfonated polystyrenes (PSS), sulfonated poly(arylene ether sulfone) (SPAES), sulfonated polyimides (SPI), or combinations thereof. In some embodiments, the metal oxides comprise the inorganic material comprises silica (SiO₂), titanium dioxide (TiO₂), iron oxide (Fe₂O₃, Fe₃O₄, etc.), aluminum oxide (Al₂O₃), zirconium dioxide (ZrO₂), cerium oxide (CeO₂), tin oxide (SnO₂), zinc oxide (ZnO), manganese oxide (MnO₂), cobalt oxide (*e*.*g*., Co₃O₄), nickel oxide (NiO), vanadium oxide (*e*.*g*., V₂O₅), calcium oxide (CaO), magnesium oxide (MgO), ruthenium oxide (*e.g.*, RuO₂), perovskite oxides (*e*.*g*., lanthanum strontium manganite, lanthanum strontium cobalt ferrite, etc.), or any combination thereof. In some embodiments, the metal comprises Sc, Ti, V, Cr, Mn, Fe, Co, Ni, Cu, Zn, Y, Zr, Nb, Mo, Tc, Ru, Rh, Pd, Ag, Cd, La, Hf, Ta, W, Re, Os, Ir, Pt, Au, Ce, Pr, Nd, Pm, Sm, Eu, Gd, Tb, or any combination thereof.

In some embodiments, the inorganic material and the powder are mixed at a mass ratio (inorganic material: powder) of 100:1, 50:1, 25:1, 10:1, 5:1, 4:1, 3:1, 2:1, 1.5:1, 1:1, 1:1.5, 1:2, 1:3, 1:4, 1:5, 1:10, 1:25, 1:50, 1:100, or any range or value including and/or between any two of these values.

### Etching

In some embodiments, the inorganic template is etched using a strong acid (*e*.*g*., HCl, HNO₃, H₂SO₄, etc.) or a strong base (*e*.*g*., KOH, NaOH) after the mixing and high-energy ball milling step (i) and before and/or after the coating step (ii). In some embodiments, the etching is performed at a concentration of acid or base of greater than or equal to about 0.1 M, greater than or equal to about 0.2 M, greater than or equal to about 0.3 M, greater than or equal to about 0.4 M, greater than or equal to about 0.5 M, greater than or equal to about 0.6 M, greater than or equal to about 0.7 M, greater than or equal to about 0.8 M, greater than or equal to about 0.9 M, greater than or equal to about 1 M, greater than or equal to about 2 M, greater than or equal to about 3 M, greater than or equal to about 4 M, greater than or equal to about 5 M, greater than or equal to about 6 M, greater than or equal to about 7 M, greater than or equal to about 8 M, greater than or equal to about 9 M, greater than or equal to about 10 M, or any range or value including and/or in between any two of these values.

In some embodiments, the etching is performed at greater than or equal to about 20 °C, greater than or equal to about 25 °C, greater than or equal to about 30 °C, greater than or equal to about 35 °C, greater than or equal to about 40 °C, greater than or equal to about 45 °C, greater than or equal to about 50 °C, greater than or equal to about 55 °C, greater than or equal to about 60 °C, greater than or equal to about 65 °C, greater than or equal to about 70 °C, greater than or equal to about 75 °C, greater than or equal to about 80 °C, greater than or equal to about 85 °C, greater than or equal to about 90 °C, or any range or value including and/or in between any two of these values.

In some embodiments, the etching is performed for greater than or equal to about 1 minute, greater than or equal to about 5 minutes, greater than or equal to about 10 minutes, greater than or equal to about 20 minutes, greater than or equal to about 30 minutes, greater than or equal to about 40 minutes, greater than or equal to about 50 minutes, greater than or equal to about 1 hour, greater than or equal to about 2 hours, greater than or equal to about 4 hours, greater than or equal to about 6 hours, greater than or equal to about 8 hours, greater than or equal to about 10 hours, greater than or equal to about 12 hours, greater than or equal to about 16 hours, greater than or equal to about 18 hours, greater than or equal to about 20 hours, greater than or equal to about 24 hours, greater than or equal to about 30 hours, greater than or equal to about 36 hours, greater than or equal to about 48 hours, or any range or value including and/or in between any two of these values.

### Inorganic Template Properties

In some embodiments, the inorganic template has a porosity (by volume) of greater than or equal to about 1%, greater than or equal to about 2%, greater than or equal to about 3%, greater than or equal to about 4%, greater than or equal to about 5%, greater than or equal to about 6%, greater than or equal to about 7%, greater than or equal to about 8%, greater than or equal to about 9%, greater than or equal to about 10%, greater than or equal to about 15%, greater than or equal to about 20%, greater than or equal to about 25%, greater than or equal to about 30%, greater than or equal to about 35%, greater than or equal to about 40%, greater than or equal to about 45%, greater than or equal to about 50%, greater than or equal to about 55%, greater than or equal to about 60%, greater than or equal to about 65%, greater than or equal to about 70%, greater than or equal to about 75%, greater than or equal to about 80%, greater than or equal to about 85%, greater than or equal to about 86%, greater than or equal to about 87%, greater than or equal to about 88%, greater than or equal to about 89%, greater than or equal to about 90%, or any range or value including and/or in between any two of these values.

In some embodiments, the inorganic template has a pore volume of greater than or equal to about 0.5 cm³/g, greater than or equal to about 0.6 cm³/g, greater than or equal to about 0.7 cm³/g, greater than or equal to about 0.8 cm³/g, greater than or equal to about 0.9 cm³/g, greater than or equal to about 1.0 cm³/g, greater than or equal to about 1.1 cm³/g, greater than or equal to about 1.2 cm³/g, greater than or equal to about 1.3 cm³/g, greater than or equal to about 1.4 cm³/g, greater than or equal to about 1.5 cm³/g, greater than or equal to about 1.6 cm³/g, greater than or equal to about 1.7 cm³/g, greater than or equal to about 1.8 cm³/g, greater than or equal to about 1.9 cm³/g, greater than or equal to about 2.0 cm³/g, greater than or equal to about 2.1 cm³/g, greater than or equal to about 2.2 cm³/g, greater than or equal to about 2.3 cm³/g, greater than or equal to about 2.4 cm³/g, greater than or equal to about 2.5 cm³/g, greater than or equal to about 2.6 cm³/g, greater than or equal to about 2.7 cm³/g, greater than or equal to about 2.8 cm³/g, greater than or equal to about 2.9 cm³/g, greater than or equal to about 3.0 cm³/g, greater than or equal to about 3.1 cm³/g, greater than or equal to about 3.2 cm³/g, greater than or equal to about 3.3 cm³/g, greater than or equal to about 3.4 cm³/g, greater than or equal to about 3.5 cm³/g, greater than or equal to about 3.6 cm³/g, greater than or equal to about 3.7 cm³/g, greater than or equal to about 3.8 cm³/g, greater than or equal to about 3.9 cm³/g, greater than or equal to about 4.0 cm³/g, greater than or equal to about 4.1 cm³/g, greater than or equal to about 4.2 cm³/g, greater than or equal to about 4.3 cm³/g, greater than or equal to about 4.4 cm³/g, greater than or equal to about 4.5 cm³/g, greater than or equal to about 4.6 cm³/g, greater than or equal to about 4.7 cm³/g, greater than or equal to about 4.8 cm³/g, greater than or equal to about 4.9 cm³/g, greater than or equal to about 5.0 cm³/g, greater than or equal to about 5.5 cm³/g, greater than or equal to about 6.0 cm³/g, greater than or equal to about 6.5 cm³/g, greater than or equal to about 7.0 cm³/g, greater than or equal to about 7.5 cm³/g, greater than or equal to about 8.0 cm³/g, greater than or equal to about 8.5 cm³/g, greater than or equal to about 9.0 cm³/g, greater than or equal to about 9.5 cm³/g, greater than or equal to about 10.0 cm³/g, or any range or value including and/or in between any two of these values.

In some embodiments, the inorganic template has a pore volume of less than or equal to about 10.0 cm³/g, less than or equal to about 9.5 cm³/g, less than or equal to about 9.0 cm³/g, less than or equal to about 8.5 cm³/g, less than or equal to about 8.0 cm³/g, less than or equal to about 7.5 cm³/g, less than or equal to about 7.0 cm³/g, less than or equal to about 6.5 cm³/g, less than or equal to about 6.0 cm³/g, less than or equal to about 5.5 cm³/g, less than or equal to about 5.0 cm³/g, less than or equal to about 4.9 cm³/g, less than or equal to about 4.8 cm³/g, less than or equal to about 4.7 cm³/g, less than or equal to about 4.6 cm³/g, less than or equal to about 4.5 cm³/g, less than or equal to about 4.4 cm³/g, less than or equal to about 4.3 cm³/g, less than or equal to about 4.2 cm³/g, less than or equal to about 4.1 cm³/g, less than or equal to about 4.0 cm³/g, less than or equal to about 3.9 cm³/g, less than or equal to about 3.8 cm³/g, less than or equal to about 3.7 cm³/g, less than or equal to about 3.6 cm³/g, less than or equal to about 3.5 cm³/g, less than or equal to about 3.4 cm³/g, less than or equal to about 3.3 cm³/g, less than or equal to about 3.2 cm³/g, less than or equal to about 3.1 cm³/g, less than or equal to about 3.0 cm³/g, less than or equal to about 2.9 cm³/g, less than or equal to about 2.8 cm³/g, less than or equal to about 2.7 cm³/g, less than or equal to about 2.6 cm³/g, less than or equal to about 2.5 cm³/g, less than or equal to about 2.4 cm³/g, less than or equal to about 2.3 cm³/g, less than or equal to about 2.2 cm³/g, less than or equal to about 2.1 cm³/g, less than or equal to about 2.0 cm³/g, less than or equal to about 1.9 cm³/g, less than or equal to about 1.8 cm³/g, less than or equal to about 1.7 cm³/g, less than or equal to about 1.6 cm³/g, less than or equal to about 1.5 cm³/g, less than or equal to about 1.4 cm³/g, less than or equal to about 1.3 cm³/g, less than or equal to about 1.2 cm³/g, less than or equal to about 1.1 cm³/g, less than or equal to about 1.0 cm³/g, or any range or value including and/or in between any two of these values.

In some embodiments, the inorganic template has a pore volume of 0.1 cm³/g to 10 cm³/g, 0.5 cm³/g to 5 cm³/g, 1 cm³/g to 5 cm³/g, 1 cm³/g to 3 cm³/g, 1.1 cm³/g to 2 cm³/g, 1.2 cm³/g to 1.8 cm³/g, 1.3 cm³/g to 1.6 cm³/g, or any range or value including and/or in between any two of these values.

In some embodiments, the inorganic template has an average pore size of greater than or equal to about 2 nm, greater than or equal to about 3 nm, greater than or equal to about 4 nm, greater than or equal to about 5 nm, greater than or equal to about 6 nm, greater than or equal to about 7 nm, greater than or equal to about 8 nm, greater than or equal to about 9 nm, greater than or equal to about 10 nm, greater than or equal to about 15 nm, greater than or equal to about 20 nm, greater than or equal to about 25 nm, greater than or equal to about 30 nm, greater than or equal to about 35 nm, greater than or equal to about 40 nm, greater than or equal to about 45 nm, greater than or equal to about 50 nm, greater than or equal to about 55 nm, greater than or equal to about 60 nm, greater than or equal to about 65 nm, greater than or equal to about 70 nm, greater than or equal to about 75 nm, greater than or equal to about 80 nm, greater than or equal to about 85 nm, greater than or equal to about 90 nm, greater than or equal to about 95 nm, greater than or equal to about 100 nm, or any range or value including and/or in between any two of these values. The pore size can be determined by N₂ or H₂ adsorption measurement. Alternatively, the pore size can be determined by Hg intrusion measurement.

In some embodiments, the inorganic template has an average pore size of less than or equal to about 100 nm, less than or equal to about 95 nm, less than or equal to about 90 nm, less than or equal to about 85 nm, less than or equal to about 80 nm, less than or equal to about 75 nm, less than or equal to about 70 nm, less than or equal to about 65 nm, less than or equal to about 60 nm, less than or equal to about 55 nm, less than or equal to about 50 nm, less than or equal to about 45 nm, less than or equal to about 40 nm, less than or equal to about 35 nm, less than or equal to about 30 nm, less than or equal to about 25 nm, less than or equal to about 20 nm, less than or equal to about 15 nm, less than or equal to about 10 nm, less than or equal to about 9 nm, less than or equal to about 8 nm, less than or equal to about 7 nm, less than or equal to about 6 nm, less than or equal to about 5 nm, less than or equal to about 4 nm, less than or equal to about 3 nm, less than or equal to about 2 nm, or any range or value including and/or in between any two of these values.

In some embodiments, the inorganic template has an average pore size of 2 nm to 100 nm, 3 nm to 80 nm, 4 nm to 50 nm, 5 nm to 10 nm, 5 nm to 8 nm, or any range or value including and/or in between any two of these values.

In some embodiments, the inorganic template has a narrow pore size distribution. In some embodiments, the inorganic template has a pore size standard deviation of less than or equal to about 35%, less than or equal to about 30%, less than or equal to about 25%, less than or equal to about 20%, less than or equal to about 15%, less than or equal to about 10%, less than or equal to about 5%, or any range or value including and/or in between any two of these values (*e*.*g*., about 5% to about 30%, about 5% to about 25%, about 5% to about 20%, about 5% to about 15%, about 5% to about 10%, about 10% to about 35%, about 10% to about 30%, about 10% to about 25%, about 10% to about 20%, about 10% to about 15%, about 15% to about 35%, about 15% to about 30%, about 15% to about 25%, about 15% to about 20%, about 20% to about 35%, about 20% to about 30%, about 20% to about 25%, or any range or value therein between).

In some embodiments, the average pore size, pore size distribution, or pore volume is measured using mercury intrusion porosimetry or gas (H₂, N₂, or He) adsorption (*e*.*g*., by Brunauer-Emmett-Teller ("BET") and/or Barrett-Joyner-Halenda methods).

The inorganic template preferably has a high specific surface area to enable dispersion of high catalyst loadings while maximizing catalyst contact with reactants (*e*.*g*., hydrogen, oxygen, etc.). In some embodiments, the inorganic template has a specific surface area of greater than or equal to about 100 m²/g, greater than or equal to about 150 m²/g, greater than or equal to about 200 m²/g, greater than or equal to about 250 m²/g, greater than or equal to about 300 m²/g, greater than or equal to about 350 m²/g, greater than or equal to about 400 m²/g, greater than or equal to about 450 m²/g, greater than or equal to about 500 m²/g, greater than or equal to about 550 m²/g, greater than or equal to about 600 m²/g, greater than or equal to about 650 m²/g, greater than or equal to about 700 m²/g, greater than or equal to about 750 m²/g, greater than or equal to about 800 m²/g, greater than or equal to about 850 m²/g, greater than or equal to about 900 m²/g, greater than or equal to about 950 m²/g, greater than or equal to about 1000 m²/g, or any range or value including and/or in between any two of these values. The specific surface area can be determined by N₂ or H₂ adsorption measurement. Alternatively, the specific surface area can be determined by Hg intrusion measurement.

In some embodiments, the inorganic template has a specific surface area of less than or equal to about 1000 m²/g, less than or equal to about 950 m²/g, less than or equal to about 900 m²/g, less than or equal to about 850 m²/g, less than or equal to about 800 m²/g, less than or equal to about 750 m²/g, less than or equal to about 700 m²/g, less than or equal to about 650 m²/g, less than or equal to about 600 m²/g, less than or equal to about 550 m²/g, less than or equal to about 500 m²/g, less than or equal to about 450 m²/g, less than or equal to about 400 m²/g, less than or equal to about 350 m²/g, less than or equal to about 300 m²/g, less than or equal to about 250 m²/g, less than or equal to about 200 m²/g, less than or equal to about 150 m²/g, less than or equal to about 100 m²/g, or any range or value including and/or in between any two of these values.

In some embodiments, the inorganic template has a specific surface area of 100 m²/g to 1000 m²/g, 150 m²/g to 800 m²/g, 200 m²/g to 600 m²/g, 250 m²/g to 500 m²/g, 300 m²/g to 450 m²/g, 350 m²/g to 400 m²/g, or any range or value including and/or in between any two of these values.

In some embodiments, the specific surface area is measured using mercury intrusion porosimetry or gas (H₂, N₂, or He) adsorption (*e*.*g*., by Brunauer-Emmett-Teller ("BET") and/or Barrett-Joyner-Halenda methods).

In some embodiments, the method of producing the inorganic template produces a pore size gradient throughout the inorganic template, allowing a spatial and/or structural gradient of nanoparticle catalyst coatings across or through the inorganic template. In some embodiments, the method of producing the inorganic template produces a spherical porous structure having a homogenous degree of graphitization or a gradient of graphitization across or through the inorganic template.

### Metal Nanoparticles

An inorganic template according to the present disclosure is coated with metal nanoparticles. The metal nanoparticles may comprise any suitable metal for catalyzing an electrolytic reaction, such as an oxygen reduction reaction (ORR) or hydrogen evolution reaction (HER). In some embodiments, the metal nanoparticles comprise Sc, Ti, V, Cr, Mn, Fe, Co, Ni, Cu, Zn, Y, Zr, Nb, Mo, Tc, Ru, Rh, Pd, Ag, Cd, La, Hf, Ta, W, Re, Os, Ir, Pt, Au, Ce, Pr, Nd, Pm, Sm, Eu, Gd, Tb, or any combination thereof. In some embodiments, the metal nanoparticles comprise a platinum group metal (PGM) (e.g., Pt, Pd, Ir, Os, Rh, Ru, or alloys thereof). In some embodiments, the metal nanoparticles comprise a noble metal (*e*.*g*., Au, Ag, Pt, Pd, Rh, Ru, Os, Ir, Cu, Hg, or alloys thereof). In some embodiments, the metal nanoparticles comprise Pt, Pd, Rh, Ru, Ir, IrO₂, Os, or any combination thereof. In some embodiments, the conductive nanoporous support comprises a single type of metal nanoparticle (*e*.*g*., Pt), two types of nanoparticles (*e*.*g*., Ir nanoparticles and Ru nanoparticles), or more than two types of metal nanoparticles.

The metal nanoparticles may have any suitable size for facilitating dispersion on the inorganic template and for facilitating an electrolytic reaction (*e*.*g*., ORR or HER). In some embodiments, the metal nanoparticles have an average particle size of greater than or equal to about 1 nm, greater than or equal to about 2 nm, greater than or equal to about 3 nm, greater than or equal to about 4 nm, greater than or equal to about 5 nm, greater than or equal to about 6 nm, greater than or equal to about 7 nm, greater than or equal to about 8 nm, greater than or equal to about 9 nm, greater than or equal to about 10 nm, greater than or equal to about 15 nm, greater than or equal to about 20 nm, greater than or equal to about 25 nm, greater than or equal to about 30 nm, greater than or equal to about 35 nm, greater than or equal to about 40 nm, greater than or equal to about 45 nm, greater than or equal to about 50 nm, greater than or equal to about 60 nm, greater than or equal to about 70 nm, greater than or equal to about 80 nm, greater than or equal to about 90 nm, greater than or equal to about 100 nm, or any range or value including and/or in between any two of these values.

In some embodiments, the metal nanoparticles have an average particle size of less than or equal to about 100 nm, less than or equal to about 90 nm, less than or equal to about 80 nm, less than or equal to about 70 nm, less than or equal to about 60 nm, less than or equal to about 50 nm, less than or equal to about 45 nm, less than or equal to about 40 nm, less than or equal to about 35 nm, less than or equal to about 30 nm, less than or equal to about 25 nm, less than or equal to about 20 nm, less than or equal to about 15 nm, less than or equal to about 10 nm, less than or equal to about 9 nm, less than or equal to about 8 nm, less than or equal to about 7 nm, less than or equal to about 6 nm, less than or equal to about 5 nm, less than or equal to about 4 nm, less than or equal to about 3 nm, less than or equal to about 2 nm, less than or equal to about 1 nm, or any range or value including and/or in between any two of these values.

In some embodiments, the metal nanoparticles have an average particle size of 1 nm to 100 nm, 1 nm to 50 nm, 1 nm to 20 nm, 1 nm to 10 nm, 1 nm to 5 nm, 1 nm to 3 nm, 2 nm to 100 nm, 2 nm to 50 nm, 2 nm to 20 nm, 2 nm to 10 nm, 2 nm to 5 nm, 2 nm to 3 nm, 3 nm to 100 nm, 3 nm to 50 nm, 3 nm to 20 nm, 3 nm to 10 nm, 3 nm to 5 nm, 5 nm to 100 nm, 5 nm to 50 nm, 5 nm to 20 nm, 5 nm to 10 nm, or any range or value therein between.

In some embodiments, the metal nanoparticles are deposited onto the inorganic template using a physical vapor deposition method. In some embodiments, the metal nanoparticles are deposited onto the inorganic template using atomic layer deposition (ALD). In some embodiments, the metal nanoparticles are deposited onto the inorganic template using a "passivation ALD" method, such as those described in, *e*.*g*., WIPO Publication No. 2018/049065A1.

In some embodiments, the method of producing the conductive nanoporous support produces an amorphous structure in the as-prepared stage (*e*.*g*., before any thermal treatment). In some embodiments, the method of producing the conductive nanoporous support further comprises, before or after the coating step (ii) and after the mixing and high-energy ball milling step (i), a thermal treatment step. In some embodiments, the thermal treatment step produces a graphitic structure (*e*.*g*., when the powder comprises a carbonaceous material).

In some embodiments, the method of producing the conductive nanoporous support produces an inorganic template with a controlled crystallinity, tunable surface wettability, a controllable degree of surface defects and edge sites. In some embodiments, the controlled crystallinity, pore size, tunable surface wettability, a controllable degree of surface defects and edge sites are obtained by using thermal, chemical, or physical treatments. In some embodiments, a conducting polymer cannot enter the small-scale pores and coat or poison the catalyst, but can coat the surface of the powder agglomerates.

In some embodiments, the conductive nanoporous support has primary and/or secondary agglomerates having an average size of greater than or equal to about 5 nm, greater than or equal to about 10 nm, greater than or equal to about 15 nm, greater than or equal to about 20 nm, greater than or equal to about 25 nm, greater than or equal to about 30 nm, greater than or equal to about 35 nm, greater than or equal to about 40 nm, greater than or equal to about 45 nm, greater than or equal to about 50 nm, greater than or equal to about 60 nm, greater than or equal to about 70 nm, greater than or equal to about 80 nm, greater than or equal to about 90 nm, greater than or equal to about 100 nm, greater than or equal to about 150 nm, greater than or equal to about 200 nm, greater than or equal to about 250 nm, greater than or equal to about 300 nm, greater than or equal to about 350 nm, greater than or equal to about 400 nm, greater than or equal to about 450 nm, greater than or equal to about 500 nm, greater than or equal to about 550 nm, greater than or equal to about 600 nm, greater than or equal to about 650 nm, greater than or equal to about 700 nm, greater than or equal to about 750 nm, greater than or equal to about 800 nm, greater than or equal to about 850 nm, greater than or equal to about 900 nm, greater than or equal to about 950 nm, greater than or equal to about 1000 nm, or any range or value including and/or in between any two of these values.

In some embodiments, the conductive nanoporous support has primary and/or secondary agglomerates having an average size of less than or equal to about 1000 nm, less than or equal to about 950 nm, less than or equal to about 900 nm, less than or equal to about 850 nm, less than or equal to about 800 nm, less than or equal to about 750 nm, less than or equal to about 700 nm, less than or equal to about 650 nm, less than or equal to about 600 nm, less than or equal to about 550 nm, less than or equal to about 500 nm, less than or equal to about 450 nm, less than or equal to about 400 nm, less than or equal to about 350 nm, less than or equal to about 300 nm, less than or equal to about 250 nm, less than or equal to about 200 nm, less than or equal to about 150 nm, less than or equal to about 100 nm, less than or equal to about 90 nm, less than or equal to about 80 nm, less than or equal to about 70 nm, less than or equal to about 60 nm, less than or equal to about 50 nm, less than or equal to about 45 nm, less than or equal to about 40 nm, less than or equal to about 35 nm, less than or equal to about 30 nm, less than or equal to about 25 nm, less than or equal to about 20 nm, less than or equal to about 15 nm, less than or equal to about 10 nm, less than or equal to about 5 nm, or any range or value including and/or in between any two of these values.

In some embodiments, the conductive nanoporous support has primary and/or secondary agglomerates having an average size of 5 nm to 1000 nm, 5 nm to 750 nm, 5 nm to 500 nm, 5 nm to 250 nm, 5 nm to 100 nm, 10 nm to 1000 nm, 10 nm to 750 nm, 10 nm to 500 nm, 10 nm to 250 nm, 10 nm to 100 nm, 25 nm to 1000 nm, 25 nm to 750 nm, 25 nm to 500 nm, 25 nm to 250 nm, 25 nm to 100 nm, 50 nm to 1000 nm, 50 nm to 750 nm, 50 nm to 500 nm, 50 nm to 250 nm, 50 nm to 100 nm, 100 nm to 1000 nm, 100 nm to 750 nm, 100 nm to 500 nm, 100 nm to 250 nm, 250 nm to 1000 nm, 250 nm to 750 nm, 250 nm to 500 nm, 500 nm to 1000 nm, 500 nm to 750 nm, 750 nm to 1000 nm, or any range or value including and/or in between any two of these values.

The catalyst loading in the conductive nanoporous support may be any concentration sufficient to ensure high activity of the catalyst. In some embodiments, the catalyst (e.g., metal nanoparticles) are present at a concentration, by weight relative to the total weight of the conductive nanoporous support, of greater than or equal to about 1 wt.%, greater than or equal to about 2 wt.%, greater than or equal to about 3 wt.%, greater than or equal to about 4 wt.%, greater than or equal to about 5 wt.%, greater than or equal to about 10 wt.%, greater than or equal to about 15 wt.%, greater than or equal to about 20 wt.%, greater than or equal to about 25 wt.%, greater than or equal to about 30 wt.%, greater than or equal to about 35 wt.%, greater than or equal to about 40 wt.%, greater than or equal to about 45 wt.%, greater than or equal to about 50 wt.%, greater than or equal to about 55 wt.%, greater than or equal to about 60 wt.%, greater than or equal to about 65 wt.%, greater than or equal to about 70 wt.%, greater than or equal to about 75 wt.%, greater than or equal to about 80 wt.%, or any range or value including and/or in between any two of these values.

In some embodiments, the catalyst (e.g., metal nanoparticles) are present at a concentration, by weight relative to the total weight of the conductive nanoporous support, less than or equal to about 80 wt.%, less than or equal to about 75 wt.%, less than or equal to about 70 wt.%, less than or equal to about 65 wt.%, less than or equal to about 60 wt.%, less than or equal to about 55 wt.%, less than or equal to about 50 wt.%, less than or equal to about 45 wt.%, less than or equal to about 40 wt.%, less than or equal to about 35 wt.%, less than or equal to about 30 wt.%, less than or equal to about 25 wt.%, less than or equal to about 20 wt.%, less than or equal to about 15 wt.%, less than or equal to about 10 wt.%, less than or equal to about 5 wt.%, less than or equal to about 4 wt.%, less than or equal to about 3 wt.%, less than or equal to about 2 wt.%, less than or equal to about 1 wt.%, or any range or value including and/or in between any two of these values.

In some embodiments, the catalyst (e.g., metal nanoparticles) are present at a concentration, by weight relative to the total weight of the conductive nanoporous support, less than or equal to about 80 mass%, less than or equal to about 75 mass%, less than or equal to about 70 mass%, less than or equal to about 65 mass%, less than or equal to about 60 mass%, less than or equal to about 55 mass%, less than or equal to about 50 mass%, less than or equal to about 45 mass%, less than or equal to about 40 mass%, less than or equal to about 35 mass%, less than or equal to about 30 mass%, less than or equal to about 25 mass%, less than or equal to about 20 mass%, less than or equal to about 15 mass%, less than or equal to about 10 mass%, less than or equal to about 5 mass%, less than or equal to about 4 mass%, less than or equal to about 3 mass%, less than or equal to about 2 mass%, less than or equal to about 1 mass%, or any range or value including and/or in between any two of these values..

### Coating Layer

In some embodiments, the conductive nanoporous powder support further comprises a coating layer comprising metals, metal oxides, metal nitrides, or a combination thereof. In some embodiments, the coating is present at a mass loading of 1-50%, 1-40%, 1-30%, 1-25%, or 1-10%, by weight relative to the total weight of the conductive nanoporous support. In some embodiments, the coating layer protects a carbonaceous powder and/or the metal nanoparticles from electrochemical oxidation in an acidic medium at various potentials and conditions (*e*.*g*., high temperature). In some embodiments, the coating layer is formed by chemical vapor deposition, physical vapor deposition, atomic layer deposition, wet chemical techniques (chemical impregnation) or any suitable method.

In some embodiments, the conductive nanoporous support may be further coated with an ion conducting polymer (ionomer) layer. In some embodiments, the ionomer is selected from perfluorosulfonic acid (PFSA) ionomers (*e*.*g*., NAFION^{™}, AQUIVION^{®}), sulfonated polyether ether ketone (SPEEK), a doped polybenzimidazle (PBI), sulfonated polystyrenes (PSS), sulfonated poly(arylene ether sulfone) (SPAES), sulfonated polyimides (SPI), or any combination thereof.

In some embodiments, the present disclosure relates to a conductive nanoporous support obtained by the methods disclosed herein, wherein the nanoporous powder comprises a carbonaceous material, the conductive nanoporous support having at least one of the following characteristics:
a high specific surface area ranging from 150-800 m²/g, preferably 300-450 m²/g;
primary and/or secondary powder agglomerates having a size in the range of 50-500 nm;
a pore volume of 1-3 cm³/g, preferably 1.3-1.6 cm³/g;
an average pore size of 4-50 nm, preferably 5-8 nm, or greater than 8 nm, such as 8-50 nm; or
a single pore size with narrow distribution and standard deviation of 15-20% or a pore size with a spatial gradient where small pore sizes on the outer surface and large pore sizes on the inner surface of the nanoporous powders.

### Electrodes and Membrane Electrode Assemblies

In another aspect, the present disclosure relates to an electrode *(e.g.,* a fuel cell electrode or electrode for an electrolytic cell) prepared as a gas diffusion electrode (GDE), porous transport electrode (PTE), or a catalyst-coated membrane (CCM) for polymeric electrolyte membrane (PEM) fuel cells.

In some embodiments, an gas difusion electrode according to the present disclosure comprises a gas diffusion layer (GDL). The gas diffusion layer may comprise any suitable material for facilitating the transport of reactants (*e*.*g*., hydrogen, oxygen, water) to a catalyst layer. In some embodiments, the GDL comprises a carbon paper, a carbon cloth, a carbon felt, a microporous layer comprising carbon black and a polymeric binder (e.g. PTFE), graphitized carbon, a metal foam, or a composite material comprising a carbonaceous material and a polymeric material.

In some embodiments, a porous transport electrode for an electrolytic cell according to the present disclosure comprises a porous transport layer (PTL). The PTL may comprise any suitable material for facilitating the transport of reactants (*e*.*g*., hydrogen, oxygen, water) to a catalyst layer. In some embodiments, the PTL comprises a carbon paper, a carbon cloth, a carbon felt, a microporous layer comprising carbon black and a polymeric binder (*e.g.* PTFE), graphitized carbon, a metal foam, or a composite material comprising a carbonaceous material and a polymeric material.

In some embodiments, the GDE according to the present disclosure further comprises a conductive nanoporous support as disclosed above coated onto the GDL, thereby obtaining a conductive nanoporous support-coated GDL, comprising the GDL, the inorganic template, and the metal nanoparticles coated onto the inorganic template.

In some embodiments, the PTE for an electrolytic cell according to the present disclosure further comprises a conductive nanoporous support as disclosed above coated onto the PTL, thereby obtaining a conductive nanoporous support-coated PTL, comprising the PTL, the inorganic template, and the metal nanoparticles coated onto the inorganic template.

In some embodiments, a GDE according to the present disclosure is produced by a method comprising coating (*e.g.,* by filtering or spraying) the nanoporous conductive support according to the present disclosure onto a gas diffusion layer, thereby obtaining the GDE.

In some embodiments, a PTE for an electrolytic cell according to the present disclosure is produced by a method comprising coating (*e.g.,* by filtering or spraying) the nanoporous conductive support according to the present disclosure onto a PTL, thereby obtaining the PTE.

In some embodiments, a GDE according to the present disclosure is produced by a method comprising the following steps:
filtering or spraying the inorganic template according to the present disclosure onto a gas diffusion layer to obtain a coated GDL;
depositing metal nanoparticles onto the coated GDL (*e*.*g*., by ALD), and optionally with transition metals and/or metal oxides, thereby obtaining the GDE.

In some embodiments, a PTE for an electrolytic cell according to the present disclosure is produced by a method comprising the following steps:
coating (*e*.*g*., by filtering or spraying) the inorganic template according to the present disclosure onto a PTL to obtain a coated PTL;
depositing metal nanoparticles onto the coated PTL (*e*.*g*., by ALD), and optionally with transition metals and/or metal oxides, thereby obtaining the PTE.

In some embodiments, a GDE according to the present disclosure is produced by a method comprising the following steps:
coating (*e*.*g*., by filtering or spraying) the inorganic template according to the present disclosure onto a gas diffusion layer to obtain a coated GDL;
depositing metal nanoparticles (*e*.*g*., Pt, Pd, Ir, IrO₂, Ru, or alloys thereof), optionally with a transition metal and/or metal oxides onto the coated GDL (*e*.*g*., by ALD), then, coating the GDL with at least one type of ion-conducting polymer (ionomer), to obtain the gas diffusion electrode (GDE).

In some embodiments, a PTE for an electrolytic cell according to the present disclosure is produced by a method comprising the following steps:
coating (*e*.*g*., by filtering or spraying) the inorganic template according to the present disclosure onto a PTL to obtain a coated PTL;
depositing metal nanoparticles (*e*.*g*., Pt, Pd, Ir, IrO₂, Ru, or alloys thereof), optionally with a transition metal and/or metal oxides onto the coated PTL (*e*.*g*., by ALD), then, coating the PTL with at least one type of ion-conducting polymer (ionomer), to obtain the porous transport electrode (PTE).

In some embodiments, a GDE according to the present disclosure is produced by mixing the conductive nanoporous material of any of the embodiments disclosed herein with an ion-conducting polymer (*e*.*g*., an ionomer) to produce a catalyst ink, then depositing the catalyst ink onto a GDL to obtain the gas diffusion electrode. In some embodiments, the mixing is performed in the presence of a solvent (*e*.*g*., ethanol, methanol, water, or combinations thereof).

In any of the above-discussed embodiments of producing a GDE, the method may further comprise, after obtaining the GDE, pressing the GDE onto an ion conducting membrane (*e*.*g*., a PEM), thereby obtaining a membrane electrode assembly (MEA).

In some embodiments, a PTE for an electrolytic cell according to the present disclosure is produced by mixing the conductive nanoporous material of any of the embodiments disclosed herein with an ion-conducting polymer (*e*.*g*., an ionomer) to produce a catalyst ink, then depositing the catalyst ink onto a PTL to obtain the PTE. In some embodiments, the mixing is performed in the presence of a solvent (*e*.*g*., ethanol, methanol, water, or combinations thereof).

In any of the above-discussed embodiments of producing a PTE, the method may further comprise, after obtaining the PTE, pressing the PTE onto an ion conducting membrane (*e*.*g*., a PEM), thereby obtaining a membrane electrode assembly (MEA).

In some embodiments, the MEA comprises: (1) a first GDE in contact with an ion conducting membrane on a first side of the ion conducting membrane; and (2) a second GDE in contact with the ion conducting membrane on a second side of the ion conducting membrane, the second side being opposite the first side. In some embodiments, the first GDE comprises Pt nanoparticles. In some embodiments, the second GDE comprises Ir nanoparticles. In some embodiments, the first GDE comprises Pt nanoparticles, and the second GDE comprises Ir nanoparticles.

In some embodiments, the MEA for an electrolytic cell comprises: (1) a first PTE in contact with an ion conducting membrane on a first side of the ion conducting membrane; and (2) a second PTE in contact with the ion conducting membrane on a second side of the ion conducting membrane, the second side being opposite the first side. In some embodiments, the first PTE comprises Pt nanoparticles. In some embodiments, the second PTE comprises Ir nanoparticles. In some embodiments, the first PTE comprises Pt nanoparticles, and the second PTE comprises Ir nanoparticles.

In another aspect, which may be combined with any other aspect or embodiment, the present disclosure relates to an electrolytic cell, wherein the electrolytic cell comprises: (1) a first PTE in contact with an ion conducting membrane on a first side of the ion conducting membrane; and (2) a second PTE in contact with the ion conducting membrane on a second side of the ion conducting membrane, the second side being opposite the first side. In some embodiments, the first PTE comprises Pt nanoparticles. In some embodiments, the second PTE comprises Ir nanoparticles. In some embodiments, the first PTE comprises Pt nanoparticles, and the second PTE comprises Ir nanoparticles.

In another aspect, the present disclosure relates to a method (*e.g.*, a decal method) of preparing a catalyst-coated membrane (CCM), the method comprising:
(a) depositing, by atomic layer deposition (ALD) or chemical deposition, metal nanoparticles comprising Pt, Pd, Ru, Rh, Os, Ir, IrO₂, Au, Ag, Cu, or alloys thereof, directly onto a conductive nanoporous support comprising a carbon powder, thereby obtaining a catalyst-coated powder wherein catalyst loading is 5-70 weight % on carbon;
(b) forming a catalyst ink from the catalyst powder by mixing the catalyst-coated powder with an ionomer and a solvent comprising one or more organic solvents (and optionally water);
(c) coating the resulting ink onto a substrate, *e*.*g*., by using a doctor blade, spray coating, slot dye nozzle or Flexo or Gravoure coating (or any suitable similar method) to form a decal film; and
(d) hot pressing or laminating the decal film from (c) on an ion conducting membrane and separating the decal film from the substrate as a membrane electrode assembly (MEA) in a fuel cell by layering it with one or more microporous layer (MPL)-coated GDLs; or hot pressing or laminating the decal film from (c) on an ion conducting membrane and separating the decal film from the substrate as a membrane electrode assembly (MEA) in an electrolytic cell by layering it with one or more microporous layer (MPL)-coated PTLs.

In another aspect, the present disclosure relates to a method (*e.g.*, a direct coating) of preparing a catalyst-coated membrane (CCM), the method comprising:
(a) depositing, by atomic layer deposition (ALD) or chemical deposition, metal nanoparticles comprising Pt, Pd, Ru, Rh, Os, Ir, IrO₂, Au, Ag, Cu, or alloys thereof, directly onto a conductive nanoporous support comprising a carbon powder, thereby obtaining a catalyst-coated powder wherein catalyst loading is 5-70 weight % on carbon;
(b) forming a catalyst ink from the catalyst powder by mixing the catalyst-coated powder with an ionomer and a solvent comprising one or more organic solvents (and optionally water);
(c) directly coating the resulting ink onto an ion-conducting membrane to form a catalyst layer, *e.g.*, by using a doctor blade, spray coating, slot dye nozzle or Flexo or Gravoure coating (or any suitable similar method) to form a CCM; and
(d) optionally contacting the side of the catalyst layer not in contact with the ion-conducing membrane with a microporous layer (MPL) or GDL; or optionally contacting the side of the catalyst layer not in contact with the ion-conducing membrane with a PTL for an electrolytic cell.

In another aspect, which may be combined with any other aspect or embodiment, the present disclosure relates to a fuel cell comprising a membrane electrode assembly (MEA), wherein the MEA comprises a GDE according to any of the embodiments disclosed herein. In some embodiments, an MEA according to the present disclosure provides enhanced power generation performance of the fuel cell, enhanced mass activity of the catalyst, high stability of a gradient coating of single-metal and alloy catalysts, and high retention of power generation performance. In another aspect, which may be combined with any other aspect or embodiment, the present disclosure relates to an electrolytic cell comprising a membrane electrode assembly (MEA), wherein the MEA comprises a PTE according to any of the embodiments disclosed herein. In some embodiments, an MEA according to the present disclosure provides enhanced power generation performance of the fuel cell, enhanced mass activity of the catalyst, high stability of a gradient coating of single-metal and alloy catalysts, and high retention of power generation performance

For instance, in some embodiments, a fuel cell or electrolytic cell comprising a MEA according to the present disclosure may have a power generation performance of greater than or equal to about 1000 mW/cm², greater than or equal to about 1100 mW/cm², greater than or equal to about 1200 mW/cm², greater than or equal to about 1300 mW/cm², greater than or equal to about 1400 mW/cm², greater than or equal to about 1500 mW/cm², greater than or equal to about 1600 mW/cm², greater than or equal to about 1700 mW/cm², greater than or equal to about 1800 mW/cm², greater than or equal to about 1900 mW/cm², greater than or equal to about 200 mW/cm², or any range or value including and/or in between any two of these values.

In some embodiments, a fuel cell or electrolytic cell comprising a MEA according to the present disclosure has a catalytic mass activity of greater than or equal to about 0.1 A/mg, greater than or equal to about 0.2 A/mg, greater than or equal to about 0.3 A/mg, greater than or equal to about 0.4 A/mg, greater than or equal to about 0.5 A/mg, greater than or equal to about 0.6 A/mg, greater than or equal to about 0.7 A/mg, greater than or equal to about 0.8 A/mg, greater than or equal to about 0.9 A/mg, greater than or equal to about 1.0 A/mg, greater than or equal to about 1.1 A/mg, greater than or equal to about 1.2 A/mg, greater than or equal to about 1.3 A/mg, greater than or equal to about 1.4 A/mg, greater than or equal to about 1.5 A/mg, or any range or value including and/or in between any two of these values (*e.g.*, 0.1 A/mg to 1.5 A/mg, 0.2 A/mg to 1.4 A/mg, 0.3 A/mg to 1.3 A/mg, 0.4 A/mg to 1.2 A/mg, 0.5 A/mg to 1 A/mg, or any range or value therein between).

In some embodiments, a fuel cell or electrolytic cell comprising a MEA according to the present disclosure has a high retention of power generation performance, measured as a percent loss of power generation or catalytic activity over a number of cycles. In some embodiments, the loss of power generation or catalytic activity is less than or equal to about 20%, less than or equal to about 19%, less than or equal to about 18%, less than or equal to about 17%, less than or equal to about 16%, less than or equal to about 15%, less than or equal to about 14%, less than or equal to about 13%, less than or equal to about 12%, less than or equal to about 11%, less than or equal to about 10%, less than or equal to about 9%, less than or equal to about 8%, less than or equal to about 7%, less than or equal to about 6%, less than or equal to about 5%, less than or equal to about 4%, less than or equal to about 3%, less than or equal to about 2%, less than or equal to about 1%, less than or equal to about 0.9%, less than or equal to about 0.8%, less than or equal to about 0.7%, less than or equal to about 0.6%, less than or equal to about 0.5%, less than or equal to about 0.4%, less than or equal to about 0.3%, less than or equal to about 0.2%, less than or equal to about 0.1%, or any range or value including and/or in between any two of these values.

In some embodiments, the loss of power generation or catalytic activity is measured in an accelerated stress test. In some embodiments, the loss of power generation or catalytic activity is measured after at least about 10,000 cycles, at least about 15,000 cycles, at least about 20,000 cycles, at least about 25,000 cycles, at least about 30,000 cycles, at least about 35,000 cycles, at least about 40,000 cycles, at least about 45,000 cycles, at least about 50,000 cycles, or any range or value including and/or in between any two of these values.

While certain embodiments have been illustrated and described, it should be understood that changes and modifications may be made therein in accordance with ordinary skill in the art without departing from the technology in its broader aspects as defined in the following claims.

The compositions and methods illustratively described herein may suitably be practiced in the absence of any element or elements, limitation or limitations, not specifically disclosed herein. Thus, for example, the terms "comprising", "including," containing", etc. shall be read expansively and without limitation. Additionally, the terms and expressions employed herein have been used as terms of description and not of limitation, and there is no intention in the use of such terms and expressions of excluding any equivalents of the features shown and described or portions thereof. It is recognized that various modifications are possible within the scope of the disclosure claimed. Thus, it should be understood that although the present disclosure has been specifically disclosed by preferred embodiments and optional features, modification and variation of the disclosure embodied therein herein disclosed may be resorted to by those skilled in the art, and that such modifications and variations are considered to be within the scope of this disclosure.

The disclosure has been described broadly and generically herein. Each of the narrower species and subgeneric groupings falling within the generic disclosure also form part of the methods. This includes the generic description of the methods with a proviso or negative limitation removing any subject matter from the genus, regardless of whether or not the excised material is specifically recited herein. The present technology is not to be limited in terms of the particular embodiments described in this application, which are intended as single illustrations of individual aspects of the present technology. Many modifications and variations of this present technology can be made without departing from its spirit and scope, as will be apparent to those skilled in the art. Functionally equivalent methods and apparatuses within the scope of the present technology, in addition to those enumerated herein, will be apparent to those skilled in the art from the foregoing descriptions. Such modifications and variations are intended to fall within the scope of the present technology.

It is to be understood that this present technology is not limited to particular methods, reagents, compounds compositions or biological systems, which can, of course, vary. It is also to be understood that the terminology used herein is for the purpose of describing particular embodiments only, and is not intended to be limiting.

One skilled in the art readily appreciates that the present disclosure is well adapted to carry out the objects and obtain the ends and advantages mentioned, as well as those inherent therein. Modifications therein and other uses will occur to those skilled in the art. These modifications are encompassed within the spirit of the disclosure and are defined by the scope of the claims, which set forth non-limiting embodiments of the disclosure.

In addition, where features or aspects of the disclosure are described in terms of Markush groups, those skilled in the art will recognize that the disclosure is also thereby described in terms of any individual member or subgroup of members of the Markush group.

All references, articles, publications, patents, patent publications, and patent applications cited herein are incorporated by reference in their entireties for all purposes. However, mention of any reference, article, publication, patent, patent publication, and patent application cited herein is not, and should not be taken as, an acknowledgment or any form of suggestion that they constitute valid prior art or form part of the common general knowledge in any country in the world.

Other embodiments are set forth in the following claims.

## Claims

1. A method of producing a conductive nanoporous support, the method comprising:
producing an inorganic template by mixing and subjecting to high-energy ball milling an inorganic material and a powder selected from a carbonaceous material, a polymer, or a metal oxide; and
coating the inorganic template with metal nanoparticles to obtain the nanoporous support.

2. The method of claim 1, wherein the inorganic material comprises silica, alumina, magnesium oxide, titanium dioxide, zinc oxide, iron oxide, or a combination thereof.

3. The method of claim 1 or claim 2, wherein the carbon precursor comprises petroleum pitch.

4. The method of any one of claims 1 to 3, wherein the polymer comprises a polyacrylonitrile, a cellulose, or a combination thereof.

5. The method of any one of claims 1 to 4, wherein the metal nanoparticles comprise a platinum group metal or a noble metal.

6. The method of claim 5, wherein the platinum group metal comprises Pt, Ru, Pd, Ru, Rh, Ir, Os, or any combination thereof, and the noble metal comprises Au, Ag, Cu, or any combination thereof.

7. The method of any one of claims 1 to 6, further comprising etching the inorganic template using a strong acid or a strong base before or after the coating.

8. A conductive nanoporous support obtained by the method according to any one of claims 1 to 7.

9. A conductive nanoporous support, comprising:
an inorganic template, wherein the inorganic template is a nanoporous powder and comprises a carbonaceous material, a metal oxide, or a polymeric material having at least one of the following characteristics:
a high specific surface area ranging from 150-800 m²/g, preferably 300-450 m²/g;
primary and/or secondary powder agglomerates having a size in the range of 50-500 nm;
a pore volume of 1-3 cm³/g, preferably 1.3-1.6 cm³/g;
an average pore size of 4-50 nm, preferably 5-8 nm; or
a single pore size with narrow distribution and standard deviation of 15-20% or a pore size with a spatial gradient where small pore sizes on the outer surface and large pore sizes on the inner surface of nanoporous powder.

10. The conductive nanoporous support of claim 9 or claim 10, further comprising a coating layer comprising a metal, a metal oxide, a metal nitride, or a combination thereof.

11. The conductive nanoporous support of claim 10, wherein the coating is present at a mass loading of 1-50%, by weight relative to the total weight of the conductive nanoporous support.

12. An electrolytic electrode or gas diffusion electrode, comprising:
a gas diffusion layer (GDL);
the conductive nanoporous support of any one of claims 8-11 disposed on the GDL;
metal nanoparticles disposed on the nanoporous powder support; and
an ionomer in contact with the metal nanoparticles.

13. An electrolytic cell or fuel cell, comprising:
a first electrode, wherein the first electrode is the electrode according to claim 12, and wherein the first electrode is in contact with a first side of an ion-conducting membrane; and
a second electrode, wherein the second electrode is the electrode according to claim 12, and wherein the second electrode is in contact with a second side of the ion-conducting membrane, the second side being opposite the first side.

14. The electrolytic cell or fuel cell according to claim 13, wherein the first electrode comprises Ir nanoparticles.

15. The electrolytic cell or fuel cell according to claim 14, wherein the second electrode comprises Pt nanoparticles.
